# EUROPÄISCHE PATENTSCHRIFT

(11) **EP 1 120 981 B1**
(45) Veröffentlichungstag und Bekanntmachung des Hinweises auf die Patenterteilung: **01.10.2003**
(21) Anmeldenummer: 00101353.1
(22) Anmeldetag: 24.01.2000
(51) Int. Cl.: H04Q 7/32, H04M 11/02

(54) **Kommunikationssystem**
Communication system
Système de communication

(43) Veröffentlichungstag der Anmeldung: 01.08.2001
(73) Patentinhaber: SCHEIDT & BACHMANN GMBH, D-41238 Mönchengladbach (DE)
(72) Erfinder: Miller, Norbert Dr., 41063 Mönchengladbach (DE); Schneider, Markus Dipl. Ing., 52477 Alsdorf (DE)
(74) Vertreter: Stenger, Watzke & Ring Patentanwälte

(56) Entgegenhaltungen:
- EP-A- 0 665 655
- EP-A- 0 821 502
- WO-A-98/58510
- US-A- 4 882 770

## Beschreibung

Die vorliegende Erfindung betrifft ein Kommunikationssystem.

In vielen Anwendungsfällen sind Kommunikationssysteme bekannt, bei denen sogenannte Gegensprechanlagen verwendet werden. Dabei handelt es sich um an verschiedenen Stellen positionierte Mikrophon-/Lautsprecherkombinationen, die mit Kommunikationsendstellen verbunden sind, beispielsweise Operationszentralen in Parkhäusern, Überwachungsanlagen in Fahrstuhlsystemen, in Zugangsberechtigungssystemen und dergleichen.

In vielen Fällen ist es für potentielle Nutzer der Gegensprechanlagen unpraktisch oder mit Aufwand verbunden, sich in den Bereich der Gegensprechanlage zu bewegen, diese zu aktivieren und, meistens zu Informations- oder Hilfszwecken mit dem entsprechenden Partner zu kommunizieren.

WO-A-9 858 510 betrifft ein Mobifunktelefon zum Austausch von Daten über eine Infrarot-Übertragungsstrecke.

US-A-4 882 770 betrifft ein drahtloses, optisches Nahbereich-Kommunikationssystem als Gegensprechsystem.

Die Gegenstellen sind keine Mobilfunktelefone und die Verbindung ist optisch.

Der vorliegenden Erfindung liegt die **Aufgabe** zugrunde, ein Kommunikationssystem der beschriebenen Art dahingehend zu verbessern, daß die Nutzung für potentielle Nutzer erheblich vereinfacht wird.

Zur technischen **Lösung** dieser Aufgabe wird mit der Erfindung vorgeschlagen, ein Kommunikationssystem, umfassend mindestens eine ortsfeste, mit einer Kommunikationsendstelle in Verbindung stehende Sende-/Empfangseinheit, einem Mobilfunkendgerät und einer mit dem Mikrophon und dem Lautsprecher des Mobilfunkendgerätes verbundenen Sende-/Empfangseinheit, die drahtlos mit der ortsfesten Sende-/Empfangseinheit in Kommunikationsverbindung bringbar ist.

Gemäß der Erfindung verfügt der Nutzer über ein Mobilfunkendgerät, ein sogenanntes Handy, dessen Mikrophon- und Lautsprechereinheit über die interne Elektronik mit einer weiteren Sende-/Empfangseinheit verbunden sind. Solche Einheiten sind als sogenannte "Blue Tooth" bekannt. Erfindungsgemäß ist vorgesehen, daß in dem entsprechenden Bereich eine ortsfeste Sende-/Empfangseinheit angeordnet ist, die ihrerseits mit der Kommunikationsendstelle in Verbindung steht. Der Nutzer kann nun diese Sende-/Empfangseinheit aktivieren, indem er die im Bereich seines Handys vorhandene Sende-/Empfangseinheit nutzt.

Beispielsweise kann eine Person, die sich in ihrem Pkw in einem Parkhaus befindet, auf einfache Weise eine Gegensprechanlage nutzen, indem die nutzerseitige Sende-/Empfangseinheit genutzt wird. Hören und Sprechen erfolgen dann unter Nutzung dieser zusätzlichen Einheit über das Handy. Dabei handelt es sich nicht um eine Mobilfunkverbindung im Sinne der bestehenden Mobilfunknetze, sondern um eine separate zusätzliche Sende-/Empfangseinheit. Die Aktivierung der Gegensprechanlage kann auf verschiedene Weise erfolgen, beispielsweise durch Anwählen einer Kennung oder dergleichen.

In erfindungsgemäßer Weise ist die nicht ortsfeste Sende-/Empfangseinheit im Handy integriert. Mit der Erfindung wird vorgeschlagen, daß diese mobile Einheit separat schaltbar ist, so daß nicht umgekehrt jede ortsfeste Sende-/Empfangseinheit automatisch in Verbindung mit der mobilen Einheit gerät.

Gemäß der Erfindung kann die Kommunikation auf verschiedene Weise initiiert werden. So kann die Kommunikation von der mobilen Sende-/Empfangseinheit initiiert werden, indem über diese automatisch oder nach Bedieneranwahl ein Signal an die ortsfeste Einheit gesendet und die Kommunikation hergestellt wird. Alternativ kann die ortsfeste Sende-/Empfangseinheit Signale aussenden, so daß in den Kommunikationsbereich eintretende Mobileinheiten automatisch in Kommunikationsverbindung treten. Die Initiierung kann mit der Benutzungsaufnahme automatisch erfolgen.

Soweit gemäß der Erfindung die ortsfeste Sende-/Empfangseinheit direkt an eine Gegensprechanlage angekoppelt ist, wird mit der Erfindung weiterhin vorgeschlagen, daß beide ortsfesten Anlagen dauerhaft im Parallelbetrieb verwendet werden. Alternativ kann auch nur eine der beiden je nach Aktivierungsvorgang nutzbar sein.

Neben der Anwendung im Parkhaus ergeben sich Anwendungen in Fahrstühlen, Zugangsberechtigungssystemen, Haustüranlagen, Zapfsäulenanlagen, Sicherheitsanlagen, im Bereich des Personenverkehrs und dergleichen.

In vorteilhafter Weise sind die Sende-/Empfangseinheiten zur digitalen Datenübertragung fähig. Auf diese Weise können nicht nur Gespräche geführt, sondern auch Informationen digital übermittelt werden.

Gemäß einem weiteren vorteilhaften Vorschlag der Erfindung kann die Verbindung eine optische Verbindung sein. So kann beispielsweise handyseitig eine sendeund empfangsfähige Infrarotschnittstelle zur Kommunikation mit einer entsprechenden Schnittstelle an der ortsfesten Einheit verwendet werden.

Weitere Vorteile und Merkmale der Erfindung ergeben sich aus der folgenden Beschreibung anhand der Figuren. Dabei zeigt:

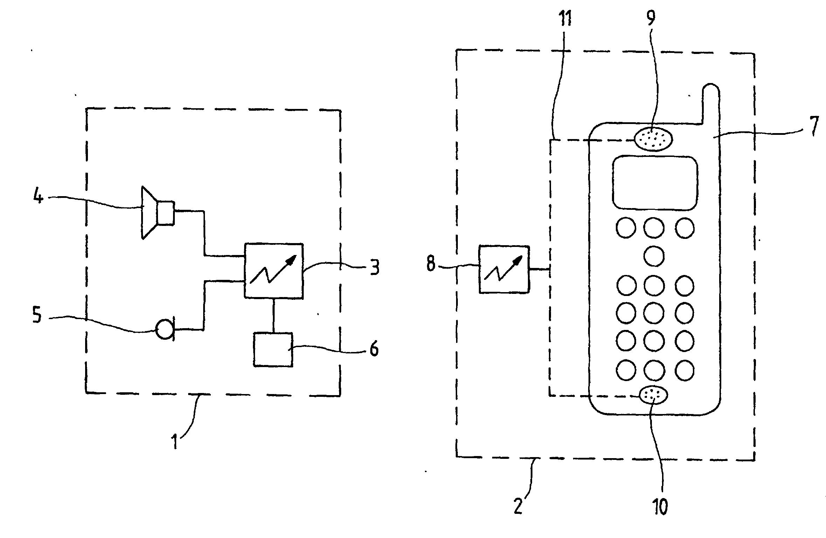

- Fig. 1: eine schematische Darstellung für ein Ausführungsbeispiel der Erfindung.

In Fig.1 sind schematisch ein Bereich 1 einer ortsfesten Sende-/Empfangsanlage und ein Bereich 2 einer mobilen Sende-/Empfangsanlage gezeigt.

Im Bereich der ortsfesten Sende-/Empfangsanlage 1 ist eine Sende-/Empfangseinheit 3 angeordnet, die mit wenigstens einem Lautsprecher 4 und einem Mikrofon 5 in Verbindung steht. Dabei kann es sich um eine Kabelverbindung in eine Bedienzentrale oder auch wiederum um eine Funkverbindung handeln. Auch können mehrere Lautsprecher/Mikrofoneinheiten angeschlossen sein. Weiterhin ist eine Steuerung 6 gezeigt, welche beispielsweise die Aktivierung der Sende-/Empfangseinheit 3 vornehmen kann

Im Bereich der mobilen Sende-/Empfangseinheit 2, beispielhaft angedeutet durch ein Handy 7, welches über ein Lautsprecher 9 und ein Mikrofon 10 sowie eine zusätzliche Sende-/Empfangseinheit 8 verfügt, ist letztere zusätzlich zur Mobilfunkeinheit mit dem Lautsprecher 9 und dem Mikrofon 10 koppelbar, angedeutet durch gestrichelte Linien 11.

Über die ortsfeste Sende-/Empfangseinheit 3 und die mobile Sende-/Empfangseinheit 8 können nun beide Einheiten in Verbindung treten, wobei die mobile Einheit 8 das Mikrofon 10 und den Lautsprecher 9 des Handys 7 nutzt.

Das beschriebene Ausführungsbeispiel dient nur der Erläuterung und ist nicht beschränkend.

### Bezugszeichenliste

- 1: ortsfeste Sende-/Empfangsanlage
- 2: mobile Sende-/Empfangsanlage
- 3: Sende-/Empfangseinheit
- 4: Lautsprecher
- 5: Mikrofon
- 6: Steuereinheit
- 7: Handy
- 8: Sende-/Empfangseinheit
- 9: Lautsprecher
- 10: Mikrofon
- 11: Verbindung

## Patentansprüche

1. Kommunikationssystem mit einer ortsfesten Gegensprechanlage (1), die eine Sende/Empfangseinheit (3) aufweist, und mit einer Kommunikationsendstelle (2), die ein Mobilfunkendgerät (7) und eine mit einem Lautsprecher (9) und mit einem Mikrophon (10) des Mobilfunkendgerätes (7) verbundene Sende/Empfangseinheit (8) aufweist, wobei die Sende/Empfangseinheit (3) der Gegensprechanlage (1) und die Sende/Empfangseinheit (8) der Kommunikationsendstelle (2) mittels Kurzstreckenfunk durch Initiierung der Kommunikation durch die nicht ortsfeste Sende-/Empfangseinheit (8) kommunikationstechnisch in Verbindung stehen und wobei die ortsfeste Sende/Empfangseinheit (3) und die Gegensprechanlage (1) dauerhaft im Parallelbetrieb betreibbar sind.

2. Kommunikationssystem nach Anspruch 1, **dadurch gekennzeichnet, daß** die nicht ortsfeste Sende/Empfangseinheit (8) in dem Mobilfunkendgerät (7) integriert ist.

3. Kommunikationssystem nach Anspruch 1 oder 2, **dadurch gekennzeichnet, daß** die nicht ortsfeste Sende/Empfangseinheit (8) dem Bluetooth-Standard entspricht.

4. Kommunikationssystem nach einem der Ansprüche 1, 2 oder 3, **dadurch gekennzeichnet, daß** die Initiierung der Kommunikation automatisch auslösbar ist.

5. Kommunikationssystem nach Anspruch 4, **dadurch gekennzeichnet, daß** für eine automatische Initiierung die Bluetooth-Identifizierung verwendbar ist.

6. Kommunikationssystem nach einem der Ansprüche 1, 2 oder 3, **dadurch gekennzeichnet, daß** die Initiierung durch Bedienwahl des Benutzers bedarfsgerecht einleitbar ist.

7. Kommunikationssystem nach einem der vorhergehenden Ansprüche, **dadurch gekennzeichnet, daß** dieses in einer Parkhausanlage verwendbar ist.

## Claims

1. Communication system with a stationary intercommunication system (1), which comprises a transmit/receive unit (3), and with a communication terminal (2), which comprises a mobile radio terminal (7) and a transmit/receive unit (8), which is connected to a loudspeaker (9) and to a microphone (10) of the mobile radio terminal (7), wherein the transmit/receive unit (3) of the intercommunication system (1) and the transmit/receive unit (8) of the communication terminal (2) are connected in communication engineering terms by means of short-range radio by initiating the communication through the non-stationary transmit/receive unit (8), and wherein the stationary transmit/receive unit (3) and the intercommunication system (1) can be permanently operated in parallel mode.

2. Communication system according to Claim 1, **characterised in that** the non-stationary transmit/receive unit (8) is integrated in the mobile radio terminal (7).

3. Communication system according to Claim 1 or 2, **characterised in that** the non-stationary transmit/receive unit (8) complies with the Bluetooth standard.

4. Communication system according to any one of Claims 1, 2 and 3, **characterised in that** the initiation of the communication can be automatically triggered.

5. Communication system according to Claim 4, **characterised in that** the Bluetooth identification can be used for automatic initiation.

6. Communication system according to any one of Claims 1, 2 and 3, **characterised in that** the initiation can be started according to requirements through an operating selection by the user.

7. Communication system according to any one of the preceding Claims, **characterised in that** this can be used in a multi-storey car park.

## Revendications

1. Système de communication avec un interphone fixe (1) comportant une unité d'émission et de réception (3), et avec un terminal de communication (2) comportant un terminal radio mobile (7), et une unité d'émission et de réception (8) reliée à un haut-parleur (9) et à un microphone (10) du terminal radio mobile (7), l'unité d'émission et de réception (3) de l'interphone (1), et l'unité d'émission et de réception (8) du terminal de communication (2), étant en liaison de technique de communication par radio de courte portée moyennant l'initiation de la communication par l'unité d'émission et de réception non fixe (8), et l'unité d'émission et de réception fixe (3) et l'interphone (1) pouvant fonctionner en régime parallèle permanent.

2. Système de communication selon la revendication 1, **caractérisé en ce que** l'unité d'émission et de réception non fixe (8) est intégrée dans le terminal radio mobile (7).

3. Système de communication selon la revendication 1 ou 2, **caractérisé en ce que** l'unité d'émission et de réception non fixe (8) correspond au standard Bluetooth.

4. Système de communication selon l'une des revendications 1, 2 ou 3, **caractérisé en ce que** l'initiation de la communication peut être déclenchée automatiquement.

5. Système de communication selon la revendication 4, **caractérisé en ce que** l'identification Bluetooth peut être utilisée pour une initiation automatique.

6. Système de communication selon l'une des revendications 1, 2 ou 3, **caractérisé en ce que** l'initiation peut être effectuée selon les besoins par une sélection de l'utilisateur.

7. Système de communication selon l'une quelconque des revendications précédentes, **caractérisé en ce que** celui-ci peut être utilisé dans une installation de parking.
